# EUROPEAN PATENT APPLICATION

(11) **EP 2 149 305 A1**
(43) Date of publication of application: **03.02.2010**
(21) Application number: 08013710.2
(22) Date of filing: 31.07.2008
(51) Int. Cl.: A23C 9/13, A23C 9/158, A23C 11/10, A23C 13/12, A23C 15/12, A23C 17/00, A23C 19/09, A23D 7/005, A23L 1/302

(54) **Premix emulsion**

(71) Applicant: DSM IP Assets B.V., 6411 TE Heerlen (NL)
(72) Inventor: Blanke, Holger, 79650 Schopfheim (DE); Ruijter, Hendrik, 4334 Sisseln (CH); Schuler, Peter, 4057 Basel (CH)
(74) Representative: Rabanus, Birgit

(57) **Abstract**

Sterile oil-in-water emulsion containing a water phase, one or more water soluble ingredient(s) and one or more emulsifiers selected from the group of caseinates.

## Description

The present invention relates to a premix emulsion, in particular the present invention relates to a premix emulsion that can be used to fortify dairy and similar products (such as soy bean milk products) with water soluble ingredients, especially with water soluble vitamins, preferably with water soluble B vitamins, more preferably with vitamins B6, B12 and folic acid.

Several deficiency diseases may result from the lack of sufficient B-vitamins, such as anemia, depression, dermatitis, high blood pressure (hypertension), water retention (deficiency of vitamin B6) or macrocytic anemia, elevated homocysteine, peripheral neuropathy, memory loss and other cognitive deficits (deficiency of vitamin B6).

The B vitamins often work together to deliver a number of health benefits to the body. B vitamins have been shown to:
- Support and increase the rate of metabolism;
- Maintain healthy skin and muscle tone;
- Enhance immune and nervous system function;
- Promote cell growth and division - including that of the red blood cells that help prevent anemia;
Combinations of B vitamins also help combat the symptoms and causes of stress, depression, and cardiovascular disease.

A popular means of increasing human's vitamin B intake is through the use of dietary supplements purchased at supermarkets, health centers, or natural food stores. B vitamins are also commonly added to energy drinks.

Milk or similar liquids need to be sterilized or pasteurized in order to avoid microbial growth during the shelf life period. Traditional heat treatment in bottles may not only affect taste and flavor of the product but is also not very compatible with modern continuous processing methods. State of the art is aseptic filling of heat treated milk into aseptic containers, very commonly into cardboard containers (such as Tetrapak® containers). In these systems the heat treatment of the milk is continuously performed before the milk is supplied to a series of filling machines where the milk is aseptically packed into sales packages. With these systems it is impossible to add any not sterilized ingredients to the milk flow after the heat treatment of the milk, i.e. directly before the packaging machine. As a consequence, the filling machines cannot run with different products at the same time. In addition, complete cleaning of the whole system is required prior to each change of the product type. These major drawbacks are overcome by the so-called FlexDos® Unit 2000 (FDU 2000), a dosing unit which is offered by Tetra Pak Arom Pak.

FDU 2000 can be integrated into existing Tetra Pak processing equipment and is placed immediately before a filling machine. The unit is able to add (heat) sensitive additives and functional ingredients, such as flavorings, aromas, lactose, prebiotic cultures, nutrients, Omega-3 fatty acids and/or vitamins, in a safe and aseptic environment and with extreme accuracy to products such as milk and juice.

The main advantages of the system are that no additional mixing tanks are needed, that the additives are not destroyed by heat in the pasteurization or sterilization phase and that there is no need to extra cleaning before the filling of the next product and/or size.

Although a dosing system such as FlexDos® has a lot of advantages there are still some issues to be solved:
- The preparations of the additives and/or functional ingredients (premixes) have to be liquid, preferably with a low viscosity of about 20 to 200 mPa·s during their whole storage time in order to be processable.
- The distribution of the ingredients in the premix has to be as homogeneous as possible in order to assure a continuously accurate dosage during the application of the premix.
- The additives and/or functional ingredients have to be stable during their whole storage time.
- Only additives that are acceptable as food ingredients may be used in the premix.

It was therefore an object of the following invention to provide a new premix composition that solves one or more of the above mentioned issues.

It has surprisingly been found that the object of the present invention is achieved by a sterile oil-in-water emulsion containing a water phase, one or more water soluble ingredient(s) and one or more emulsifiers selected from the group of caseinates.

It was not to be foreseen by the person skilled in the art that oil-in-water emulsions according to the present invention would solve the above mentioned issues.

The emulsion according to the present invention is manufactured by blending the hydro- (water) soluble components with the fat soluble components. The oil-in-water emulsion is then prepared by known emulsifying technologies. The emulsion and/or its components are sterilised and then aseptically filled in containers specifically designed for use in an aseptic filling system for milk or similar products.

In a preferred embodiment of the present invention the water soluble ingredient(s) (one or more compounds) are selected from the group of water soluble vitamins, more preferred from the group of B vitamins, most preferred from vitamins B6, B12, folic acid and/or derivatives thereof that are acceptable as food ingredients. Especially preferred is a mixture of vitamins B6, B12 and folic acid.

The ratio of vitamin B6 (mg pyridoxine) / vitamin B12 (mg cyanocobalamine) / mg folic acid is preferably selected as follows: 1 / 0.0003 to 0.0007 / 0.07 to 0.13, more preferably 1 / 0.0001 to 0.001 / 0.05 to 0.2 with regard to the weight of the vitamins, respectively:

| | **preferred** | **more preferred** |
|---|---|---|
| Vitamin B6 | 1 | 1 |
| Vitamin B12 | 0.0001 - 0.001 | 0.0003 - 0.0007 |
| folic acid | 0.05 - 0.2 | 0.07 - 0.13 |

According to the present invention it is advantageous if the amount of vitamin B6 in the emulsion is in the range of 0.05 to 1.0 % by weight, based on the total weight of the composition. If vitamins B12 and folic acid are also present in the emulsion according to the present invention their preferred amounts result from the ratios given above. Optionally, other B-vitamins can be added in such an emulsion at levels and ratios calculated on the basis of the recommended dietary allowances for these vitamins.

It is further preferred to additionally incorporate fat (lipid) soluble ingredient(s), such as fat soluble vitamins, especially vitamins A, D3, E and optionally K into the emulsion according to the present invention. The term "vitamin K" denotes a group of vitamins that are needed for the posttranslational modification of certain proteins, mostly required for blood coagulation. It is preferred to use the fat (lipid) soluble forms and derivatives of this vitamin, such as vitamin K1 (phytomenadione) and/or vitamin K2.

In a further preferred embodiment the oil-in-water emulsion according to the present invention additionally contains at least one component selected from the group consisting of polyunsaturated fatty acids and esters of polyunsaturated fatty acids.

Polyunsaturated fatty acids, which are suitable according to the present invention, are polyunsaturated carboxylic acids having preferably 16 to 24 carbon atoms and, in particular, 2 to 6 double bonds, particularly preferably having 4 or 5 or 6 double bonds.

The unsaturated fatty acids can belong both to the n-6 series and to the n-3 series. Polyunsaturated fatty acids of the n-3 series are preferred. Preferred examples of n-3 polyunsaturated acids are eicosapenta-5,8,11,14,17-enoic acid (EPA) and docosanexa-4,7,10,13,16,19-enoic acid (DHA), as well as arachidonic acid (ARA).

Preferred derivatives of the polyunsaturated fatty acids are their esters, for example glycerides and, in particular, triglycerides; particularly preferably the ethyl esters. Triglycerides of n-3 polyunsaturated fatty acids are especially preferred.

The triglycerides can contain 3 uniform unsaturated fatty acids or 2 or 3 different unsaturated fatty acids. They may also partly contain saturated fatty acids.

When the derivatives are triglycerides, normally three different n-3 polyunsaturated fatty acids are esterified with glycerol. In one preferred embodiment of the present invention triglycerides are used, whereby 30 % of the fatty acid part are n-3 fatty acids and of these 25 % are long-chain polyunsaturated fatty acids. In a further preferred embodiment commercially available ROPUFA® '30' n-3 Food Oil (DSM Nutritional Products Ltd, Kaiseraugst, Switzerland) is used. In another preferred embodiment of the present invention the PUFA ester is ROPUFA® '75' n-3 EE. ROPUFA® '75' n-3 EE is refined marine oil in form of an ethyl ester with minimum content of 72 % n-3 fatty acid ethyl ester. It is stabilized with mixed tocopherols, ascorbyl palmitate, citric acid and contains rosemary extract.

According to the present invention it can be advantageous to use naturally occurring oils (one ore more components) containing triglycerides of polyunsaturated fatty acids, for example marine oils (fish oils) and/or plant oils.

Preferred oils which comprise triglycerides of polyunsaturated fatty acids are olive oil, sunflower seed oil, evening primrose seed oil, borage oil, grape seed oil, soybean oil, groundnut oil, wheat germ oil, pumpkin seed oil, walnut oil, sesame seed oil, rapeseed oil (canola), blackcurrant seed oil, kiwifruit seed oil, oil from specific fungi and fish oils.

Alternatively other polyunsaturated fatty acids (e. g. omega-3 fatty acids; omega-6 fatty acids) and/or their derivatives may be used.

If the oil-in-water emulsion according to the present invention contains one or more component(s) selected from the group consisting of polyunsaturated fatty acids and esters of polyunsaturated fatty acids it is especially preferred if the emulsion further comprises one or more antioxidant(s), It is advantageous if the amount of antioxidant(s) (one or more compounds) in the emulsion is in the range of from 1.5 to 2.5 % by weight, based on the total weight of the emulsion. It is most preferred to use sodium ascorbate as antioxidant.

The term "caseinates" as used herein relates to salts of casein proteins with bases. Salts with alkali metals (especially sodium, potassium) and alkaline earth metals (especially calcium) are preferred.

The term "casein proteins" as used herein comprises all members of the fractions of milk proteins designated caseins, known to a person skilled in the art, comprising alpha-, beta-, gamma-, kappa- and lambda-caseins as sub-groups, taken individually or in the form of naturally occurring or synthetically prepared mixtures thereof. Within these subgroups a multitude of genetic variations exist depending on the type and breed of animal as source of the milk. In connection with the present invention milk from all kinds of mammals including humans can be used as source of the casein. The preferred source is milk from cows. The casein proteins apart from being distinguished by their amino acid sequences and their tendency to form dimers, trimers and higher oligomers, are carrying different amounts of phosphate and carbohydrate groups. Among the carbohydrate groups are galactose, galactosamine and N-acetyl-neuraminic acid groups. Sodium caseinates are especially preferred.

According to the present invention it is possible to modulate the viscosity by choice of the caseinate used. Advantageously a desired viscosity is adjusted by choice of the caseinate used. It is preferred to adjust a low viscosity, i.e. a viscosity of about 20 to 200 mPa·s.

According to the present invention it is advantageous if the amount of caseinate(s) (one or more compounds) in the emulsion is in the range of from 2 to 5 % by weight, preferably from 2.5 to 4.5 % by weight, each based on the total weight of the emulsion.

The oil phase of the emulsions according to the present invention advantageously contains one or more edible oil(s), preferred plant (vegetable) oils. Preferred are sunflower oil, coconut oil, com oil, cottonseed oil, canola oil, rapeseed oil, olive oil, palm oil, peanut oil, safflower oil, sesame oil, soybean oil, nut oils (such as almond oil, cashew oil, hazelnut oil, macadamia oil, pecan oil, pistachio oil, walnut oil) including fractionated qualities thereof.

According to the present invention it is advantageous if the amount of edible oil(s) (one or more compounds) in the emulsion is in the range of 40 to 60 % by weight, preferably from 45 to 55 % by weight, each based on the total weight of the composition.

It is especially preferred to use the emulsions according the present invention as premixes to fortify dairy products or similar products such as soy bean milk products with the help of a dosage system that is placed immediately before or integrated in a filling machine, especially preferred is the use of emulsions according the present invention as a premix to fortify dairy or similar products with the help of a FlexDos® Unit 2000.

Accordingly a further object of the present invention is a method of fortifying dairy or similar products said method comprising the steps of
a. pasteurizing a bulk of raw milk or of a similar product (hereinafter collectively referred to as "liquid") to reduce the number of harmful micro organisms;
b. optionally homogenizing the bulk of liquid to prevent the separation of the fat and water phases (creaming) of the liquid;
c. adding a sterile oil-in-water emulsion containing a water phase, one or more water soluble ingredient(s) and one or more emulsifiers selected from the group of caseinates to the so-treated liquid immediately before filling it into the sales package.

The term "sales package" as used herein comprises all kinds of containers that are sold to the end consumer (customer) or user of the fortified dairy product, e.g. glass and plastics containers, such as glass and plastic bottles, plastic bags, plastic jugs and so on, cartons, such as waxed cardboard boxes, boxes formed from multilayer cardboard foils, including packaging systems such as Elopak systems, SIG Combibloc, TetraPak® systems etc., metal cans and the like.

The term "dairy product" as used herein relates to all kinds of food or feed products produced from milk, wherein the raw milk for processing comes from cows, goats or other mammals such as sheep, (water) buffalos, yaks, horses or camels. The term "dairy product" as used herein further comprises food or feed products produced from milk similar products, such as soy bean milk products and so on.

According to the present invention preferred dairy products are milk, buttermilk, soured milk, milk shakes, fermented milk, yoghurts, yoghurt drinks, cream, sour cream, ice cream, cheese, cottage cheese, butter; preferred "similar products" are soy bean milk products, such as soy milk, bean curd (tofu) and so on.

It was not to be foreseen by the person skilled in the art that it would not be necessary to subsequent sterilise or pasteurise the water soluble ingredients that are added to the dairy products if they are added to the product with the help of an emulsion according to the present invention.

It is preferred to use 0.25 - 2.5 mg of the premix to enrich one (1) unit of the dairy product (100 - 1000 ml), each depending on national fortifying regulations.

### Examples:

| **Example** | **I** |
|---|---|
| **Ingredient** | **% by weight** |
| Water | 44.06985 |
| Sunflower oil | 50 |
| Sodium Caseinate | 3.3 |
| Sodium Ascorbate | 2.5 |
| Di-potassium-ortho-phosphate | 0.08 |
| Vitamin B6 | 0.25 |
| Vitamin B12 | 0.00015 |
| Folic Acid | 0.025 |

| **Example** | **II** |
|---|---|
| **Ingredient** | **% by weight** |
| Water | 45.04485 |
| Sunflower oil | 1.1 |
| Sodium Caseinate | 3.5 |
| Sodium Ascorbate | 2 |
| Di-potassium-ortho-phosphate | 0.08 |
| Vitamin B6 | 0.25 |
| Vitamin B12 | 0.00015 |
| Folic Acid | 0.025 |
| ROPUFA® '30' n-3 Food Oil (30% n-3 polyunsaturated fatty acids, mainly EPA and DHA) | 48.000 |

## Claims

1. Sterile oil-in-water emulsion containing a water phase, one or more water soluble ingredient(s) and one or more emulsifiers selected from the group of caseinates.

2. Emulsion according to claim 1 **characterized in that** the water soluble ingredient(s) (one or more compounds) are selected from the group of water soluble vitamins.

3. Emulsion according to claim 2 **characterized in that** it contains next to one or more water soluble vitamins additionally at least one component selected from the group consisting of polyunsaturated fatty acids and esters of polyunsaturated fatty acids.

4. Emulsion according to claim 2 or 3 **characterized in that** the water soluble vitamins are selected from the group consisting of B vitamins, preferably from the group consisting of vitamins B6, B12 and folic acid and/or derivatives thereof that are acceptable as food ingredients.

5. Emulsion according to any of the preceding claims **characterized in that** it contains a mixture of vitamins B6, B12 and folic acid and/or derivatives thereof that are acceptable as food ingredients.

6. Emulsion according to any of the preceding claims **characterized in that** it further contains fat soluble ingredient(s) (one or more compounds) selected from the group of fat (lipid) soluble vitamins, preferably from the group consisting of vitamin D, vitamin A, vitamin E, vitamin K1, vitamin K2 and/or derivatives thereof that are acceptable as food ingredients.

7. Emulsion according to any of the preceding claims **characterized in that** the amount of caseinate(s) (one or more compounds) in the emulsion is in the range of from 2 to 5 % by weight, based on the total weight of the emulsion.

8. Emulsion according to any of the preceding claims **characterized in that** the amount of caseinate(s) (one or more compounds) in the emulsion is in the range of from 2.5 to 4.5 % by weight, based on the total weight of the emulsion.

9. Use of emulsions according to any of the preceding claims as a premix to fortify dairy products and similar products.

10. Use according to claim 9 wherein the fortification is carried out with the help of a dosage system that is placed immediately before or integrated in a filling machine.

11. Use according to claim 9 **characterized in that** the dairy product is selected from the group consisting of milk, buttermilk, soured milk, milk shakes, fermented milk, yoghurts, yoghurt drinks, cream, sour cream, ice cream, cheese, cottage cheese, butter.

12. Use according to claim 9 **characterized in that** the similar product is selected from the group consisting of soy bean milk products.

13. Method of fortifying dairy products said method comprising the steps of
a. pasteurizing a bulk of raw milk or of a similar product (hereinafter collectively referred to as "liquid") to reduce the number of harmful micro organisms;
b. optionally homogenizing the bulk of liquid to prevent the separation of the fat and water phases (creaming) of the liquid;
c. adding a sterile oil-in-water emulsion containing a water phase, one or more water soluble ingredient(s) and one or more emulsifiers selected from the group of caseinates to the so-treated liquid immediately before filling it into the sales package.
